# FASCICULE DE BREVET EUROPEEN

(11) **EP 2 019 038 B1**
(45) Date de publication et mention de la délivrance du brevet: **26.05.2010**
(21) Numéro de dépôt: 08159476.4
(22) Date de dépôt: 02.07.2008
(51) Int. Cl.: B64G 1/50, B64G 1/54, G01J 5/06

(54) **Dispositif de protection solaire pour instrument spatial**
Sonnenschutzvorrichtung für ein Instrument im Weltraum
Solar protection device for a spatial instrument

(30) Priorité: 24.07.2007 FR 0705377
(43) Date de publication de la demande: 28.01.2009
(73) Titulaire: Thales, 92200 Neuilly Sur Seine (FR)
(72) Inventeur: Alis, Claude, 06550, LA ROQUETTE SUR SIAGNE (FR); Vieillot, Jacques, 06150, CANNES LA BOCCA (FR)
(74) Mandataire: Esselin, Sophie

(56) Documents cités:
- EP-A- 1 179 474
- FR-A- 2 658 783
- PETERSEN H ET AL: "PASSIVE CRYOGENIC COOLER FOR MSG SEVIRI DESIGN AND PERFORMANCE" EUROPEAN SYMPOSIUM ON SPACE ENVIRONMENTAL CONTROL SYSTEMS, XX, XX, vol. 2, 20 mai 1997 (1997-05-20), pages 523-531, XP000998244

## Description

La présente invention concerne un dispositif de protection solaire pour instrument spatial. Cette invention est particulièrement adaptée aux instruments de mesure électromagnétique pointant dans une direction proche de celle du soleil.

En effet, il est connu que l'éclairement solaire direct sur un système collecteur de rayonnement électromagnétique entraîne des déformations thermoélastiques de celui-ci ; ce qui le rend inopérant pendant certaines périodes. Il est même possible qu'un rayonnement électromagnétique direct provoque des dégradations irréversibles, voire la destruction de l'instrument par échauffement thermique.

Actuellement, afin de tenter de pallier ce problème, de multiples solutions ont été mises au point. D'abord, il est possible de dépointer l'axe de visée de l'instrument lorsque le flux solaire éclaire directement ce dernier ou lorsqu'il en est proche. Une autre technologie consiste à obstruer momentanément l'entrée de l'instrument ou toute autre zone de l'instrument affectée par le flux solaire afin de le protéger d'un éclairement direct.

Il est également connu que l'on peut mettre au point un système « athermique » dont le principe est que des déformations sont appliquées à la structure porteuse du système collecteur afin de compenser les déformations des éléments collecteurs sous l'effet de variations de température.

Une autre technique pour éviter toute dégradation des instruments consiste à positionner des filtres solaires en entrée du système ou dans une autre zone de l'instrument.

Enfin, dans les instruments spatiaux récents, un système de baffle solaire est couramment mis en oeuvre. Un baffle solaire, positionné en amont des instruments collecteurs par rapport au soleil, a alors vocation à absorber et à diffuser l'énergie solaire, notamment par l'intermédiaire de chicanes comportant des matériaux métalliques. C'est ce type de technologie qui est mis en oeuvre, par exemple, dans le brevet européen EP1179474.

En effet, EP1179474 décrit un dispositif de protection solaire pour instrument spatial comprenant un baffle thermique et une plate-forme comportant des instruments de mesure, ladite plate-forme étant mécaniquement indépendante du baffle thermique.

Cependant, des pertes ou des dégradations des images et des indisponibilités des éléments collecteurs subsistent. Ceci est extrêmement pénalisant pour les missions d'observation actuelles.

En outre, généralement, une même structure supporte à la fois les éléments chargés d'absorber le rayonnement solaire et les miroirs ou autres instruments collecteurs. Ceci implique obligatoirement des déformations dues aux variations de températures importantes. Ainsi, même dans le cas où un même matériau, typiquement du béryllium, est utilisé pour l'ensemble des structures, ce qui implique des déformations homothétiques de ces structures et donc pas de déréglage des optiques, des inconvénients importants vont persister :
D'abord, même homothétique, la dilatation des instruments entraîne une augmentation de la tache image par rapport à son plan focal et donc un déréglage de l'instrument (les pixels du plan focal n'observant plus la même scène, mais une scène dilatée) et une perte de résolution.
Ensuite, dans le cas des satellites géostationnaires, les variations importantes de température se font sur une période d'environ un jour, ce qui constitue un temps trop court pour permettre une homogénéisation de la température dans toutes les pièces. Pour minimiser ce problème, on va couramment chercher à favoriser la diffusion de la chaleur solaire dans l'équipement en tapissant la surface interne du baffle solaire de miroirs. Mais, de cette façon, le risque de dégradation des optiques augmentent fortement du fait des multiples réflexions du rayonnement solaire au sein de l'équipement. Par ailleurs, ce principe augmente la lumière parasite dans l'instrument.

En résumé, aucune des technologies actuelles ne permet l'utilisation en continu d'un instrument collecteur pointant dans une direction proche de celle du soleil sans risque de dégradation de l'instrument ou de ses performances, notamment en termes de résolution et de disponibilité.

Un but de l'invention est de pallier les inconvénients précités. Ainsi pour assurer la disponibilité en continu, la performance et la non-dégradation d'instruments collecteurs orientés vers le soleil, l'invention propose l'utilisation d'un bafflage solaire thermiquement et mécaniquement isolé de la plate-forme supportant les instruments collecteurs de l'équipement.

A cet effet, l'invention a pour objet un dispositif de protection solaire pour instrument spatial comportant :
- une structure thermique comportant au moins un baffle thermique destiné à intercepter le flux solaire éclairant l'instrument spatial,
- un plateau supportant la structure thermique,
- une plate-forme stabilisée, équipée d'instruments de mesure ou d'observation,
- une plate-forme commune,
ladite plate-forme commune supportant de façon indépendante ledit plateau et ladite plate-forme stabilisée, ladite structure thermique et la plate-forme stabilisée ne présentant entre eux aucun contact physique et étant par conséquent mécaniquement découplés, caractérisé en ce que ladite structure thermique et ledit plateau sont par ailleurs thermiquement découplés par l'intermédiaire de moyens de découplage thermique.

Avantageusement, la plate-forme stabilisée supporte et maintient stables des éléments permettant de collecter, de traiter ou de détecter un rayonnement électromagnétique, tels que des surfaces collectrices, des dioptres ou des miroirs.
Avantageusement, le baffle thermique stocke le flux solaire par chaleur sensible ou latente.
Avantageusement, le baffle thermique draine par conduction ou par radiation, par exemple par l'intermédiaire de caloducs ou de boucles fluides, le flux solaire vers des surfaces matérielles, telles que des radiateurs.
Avantageusement, le baffle thermique draine par conduction ou par radiation, par exemple par l'intermédiaire de caloducs ou de boucles fluides, le flux solaire vers des surfaces non matérielles, telles qu'une surface d'entrée du baffle solaire.

Avantageusement, des entretoises isolantes telles que des lames en titane par exemple, correspondant à un premier type de moyens de découplage thermique, assurent le découplage thermique par conduction.
Avantageusement, des écrans radiatifs tels que des MLI (pour MultiLayer Insulation selon l'acronyme anglais) par exemple, correspondant à un second type de moyens de découplage thermique, assurent le découplage thermique par radiation.
Avantageusement, la structure thermique comporte au moins deux baffles thermiques dont l'un est appelé baffle solaire et l'autre baffle interne.
Avantageusement, le baffle solaire est constitué d'aluminium.
Avantageusement, le baffle interne est constitué de l'un des matériaux suivants : aluminium, béryllium, AlBeMet^{R}, céramique, SiC, CeSiC^{R}_{.}
Avantageusement, le baffle solaire présente une hauteur d'environ 1,6 mètre.
Avantageusement, les éléments permettant de collecter, de traiter ou de détecter un rayonnement électromagnétique, tels que des surfaces collectrices, des dioptres ou des miroirs comportent de l'argent ou de l'or.
Avantageusement, la plate-forme commune présente une longueur d'environ 1,5 mètre et une largeur d'environ 1 mètre.

D'autres caractéristiques et avantages de l'invention apparaîtront à l'aide de la description qui suit faite en regard des dessins annexés qui représentent :
- la figure 1 : la vue schématique d'un instrument spatial selon l'état de l'art, comportant notamment un baffle solaire ;
- la figure 2 l'exemple d'une structure assurant une fonction uniquement thermique dans le dispositif selon l'invention ;
- la figure 3 : l'exemple d'une plate-forme stabilisée n'assurant aucune fonction thermique dans le dispositif selon l'invention ;
- la figure 4 : la vue éclatée d'un exemple de dispositif selon l'invention ;
- la figure 5 : le schéma de l'assemblage des différentes structures d'un exemple de dispositif selon l'invention.

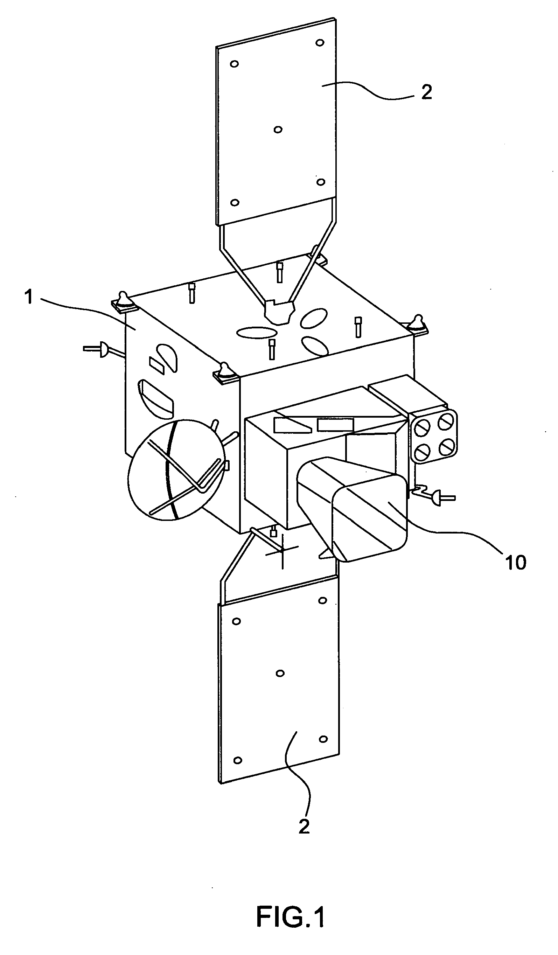

La figure 1 présente un schéma d'un satellite artificiel 1 typique, avec des panneaux solaires 2 et un baffle solaire 10. Ce baffle solaire 10 a vocation à intercepter le rayonnement solaire susceptible de dégrader les performances des optiques intégrées au satellite 1.

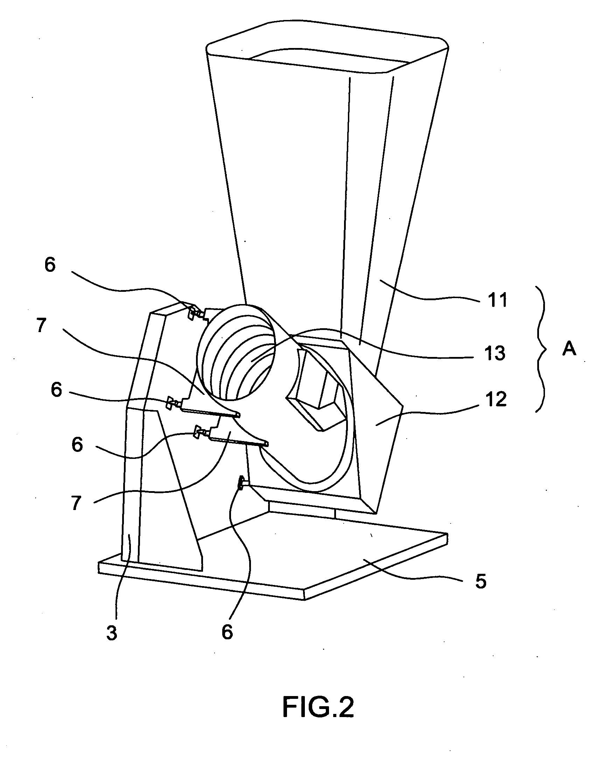

La figure 2 illustre la structure thermique A sur son support, le plateau 3, lui-même fixé sur un plateau d'interface 5, dans un exemple de dispositif selon l'invention. La fonction de cette structure A est d'intercepter le flux solaire, de le stocker et de le rejeter. Dans l'exemple de la figure 2, cette structure A est composée de trois baffles thermiques 11, 12 et 13. Le baffle thermique 11 est appelé baffle solaire et les baffles thermiques 12 et 13 constituent le baffle interne. Ces baffles sont généralement réalisés dans un matériau conducteur thermiquement : le plus souvent l'aluminium pour le baffle solaire ; le plus souvent l'aluminium, le béryllium, l'AlBeMet^{R} (produit de la société Brush Wellman Inc.) , la céramique, le SiC ou le CeSiC^{R} (produit de la société ECM Ingenieurunternehmen für Energie- und Umwelttechnik GmbH) pour le baffle interne.
Par ailleurs, le baffle interne 12-13 peut être isolé thermiquement du plateau 3 par l'intermédiaire de différents moyens, dont deux sont représentés sur le schéma de la figure 2. Ainsi, dans un exemple de dispositif selon l'invention, un découplage thermique par conduction est mis en oeuvre par l'intermédiaire de lames en titane 6. Ces lames en titane 6 présentent le double-avantage d'absorber, du fait de leur souplesse mécanique en flexion, la dilatation thermique du baffle interne 12-13, généralement en aluminium, dont le coefficient de dilatation thermique vaut 23 ppm, et d'isoler conductivement le baffle interne 12-13 du plateau 3 du fait d'une faible conductivité intrinsèque du titane et d'une faible surface de contact. En outre, les berceaux 7, qui maintiennent le baffle thermique 12 et le fixent sur le plateau 3, sont également constitués de matériau peu conducteur.

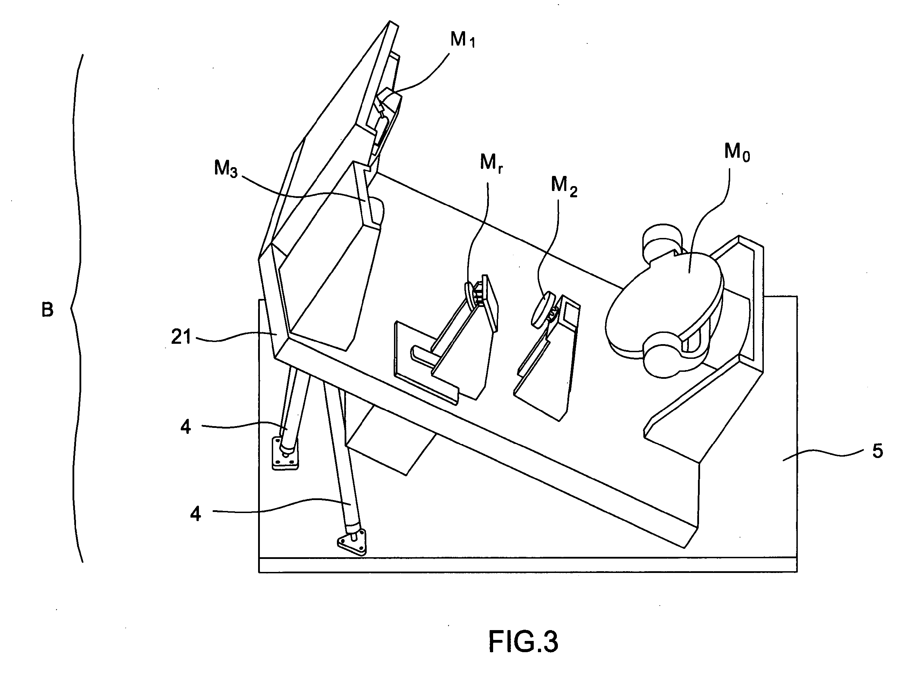

La figure 3 représente un schéma de la structure mécaniquement stabilisée B sur son support, le plateau d'interface 5, dans un exemple de dispositif selon l'invention. Dans cet exemple, la structure mécaniquement stabilisée B comporte des éléments optiques dont la fonction est de collecter un rayonnement électromagnétique. Ainsi, la plate-forme optique 21, mécaniquement stabilisée par l'intermédiaire de moyens de stabilisation 4, supportent différents éléments optiques que l'on retrouve couramment dans des instruments spatiaux d'observation. Il s'agit des miroirs M₀, également appelé miroir de scan, dont le rôle est de déterminer l'axe de visée de l'instrument, M₁, dont le rôle est de concentrer le faisceau lumineux, M₂ et M₃ qui servent à compenser les aberrations optiques de M1 et Mᵣ, ou miroir de renvoi, dont la fonction est de couder le faisceau lumineux afin de l'orienter vers un cryostat pour qu'il soit ensuite analysé.

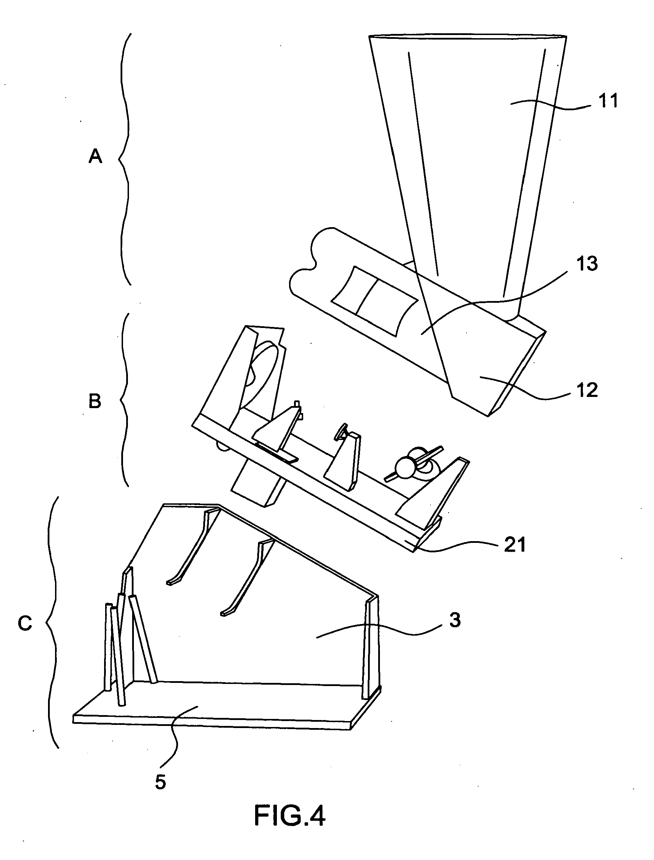

La figure 4 présente une vue schématique éclatée du dispositif selon l'invention. On y retrouve la structure thermique A, la structure mécaniquement stabilisée B et leurs supports regroupés dans la structure portante C. On constate bien que les structures A et B sont indépendantes. Il n'y a aucun contact mécanique entre elles. Ainsi, la structure thermique A est fixée sur le support 3 de la structure C et n'a aucun contact avec le plateau 5 qui supporte le plateau optique 21 mécaniquement stabilisée par l'intermédiaire des moyens de stabilisation 4. Les fonctions de protection contre le rayonnement solaire et de stabilisation mécanique des éléments collecteurs du dispositif sont donc totalement indépendantes. Par ailleurs, des éléments tels que des entretoises isolantes ou des écrans radiatifs, interposés entre la structure A et la structure B viennent renforcer le découplage thermique entre ces structures. Outre les lames en titane présentés en figure 2 et qui assurent le découplage thermique par conduction, des écrans radiatifs tels que des MLI (pour MultiLayer Insulation selon l'acronyme anglais) peuvent être placés autour du baffle interne 12-13. Ces MLI sont en fait une succession d'écrans isolants thermiquement, souvent en plastique, et comportant de l'aluminium, séparés par des couches de Dacron^{R} (marque de la société Investa Inc.) net assurant la fonction d'intercalaires. Il y a généralement une quinzaine de couches en tout.

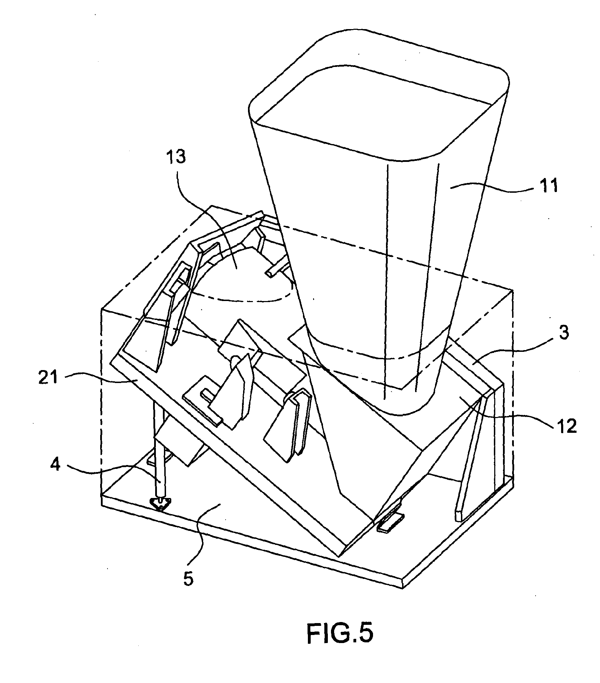

La figure 5 permet de visualiser l'assemblage des structures A, B et C dans un exemple de dispositif selon l'invention. Dans cet exemple, outre le miroir de scan M₀, situé dans le baffle thermique 12, au moins une optique se trouve dans l'alvéole chaude du baffle interne 13. Le plateau d'interface 5 mesure typiquement 1,5 mètre de long sur 1 mètre de large ; le baffle solaire 11 présente une hauteur de 1,65 mètre environ, ce qui contraste avec les baffles solaires utilisés aujourd'hui. Ces derniers sont généralement beaucoup plus petits, présentant une hauteur d'environ 0,5 mètre. En fait, le baffle solaire 11 a pour principale fonction de réduire au maximum les entrées de rayonnement solaire à l'intérieur de la cavité d'entrée de l'instrument. Son efficacité est directement liée à sa hauteur. Enfin, les optiques, qui ne doivent pas absorber de rayonnement, sont, de façon préférentielle, recouvertes d'argent sur leurs faces actives, mais peuvent aussi être recouvertes d'or sur leurs faces actives.

En résumé, l'invention a pour principal avantage de permettre l'utilisation en continu d'instruments spatiaux pointant dans une direction proche de celle du soleil par le découplage des fonctions de protection solaire et des fonctions de stabilisation mécanique des éléments collecteurs de rayonnement électromagnétique.

## Revendications

1. Dispositif de protection solaire pour instrument spatial comportant :
• une structure thermique (A) comportant au moins un baffle thermique (11,12,13) destiné à intercepter le flux solaire éclairant l'instrument spatial,
• un plateau (3) supportant la structure thermique (A),
• une plate-forme stabilisée (21), équipée d'instruments de mesure ou d'observation (M₀,M₁,M₂,M₃,Mᵣ),
• une plate-forme commune (5),
ladite plate-forme commune (5) supportant de façon indépendante ledit plateau (3) et ladite plate-forme stabilisée (21), ladite structure thermique (A) et la plate-forme stabilisée (21) ne présentant entre eux aucun contact physique et étant par conséquent mécaniquement découplés, **caractérisé en ce que** ladite structure thermique (A) et ledit plateau (3) sont par ailleurs thermiquement découplés par l'intermédiaire de moyens de découplage thermique (6,7).

2. Dispositif selon la revendication 1, **caractérisé en ce que** la plate-forme stabilisée (21) supporte et maintient stables des éléments permettant de collecter, de traiter ou de détecter un rayonnement électromagnétique, tels que des surfaces collectrices, des dioptres ou des miroirs (M₀,M₁,M₂,M₃,Mᵣ).

3. Dispositif selon l'une quelconque des revendications 1 à 2, **caractérisé en ce que** le baffle thermique (11,12,13) stocke le flux solaire par chaleur sensible ou latente.

4. Dispositif selon l'une quelconque des revendications 1 à 3, **caractérisé en ce que** le baffle thermique (11,12,13) draine par conduction ou par radiation, par exemple par l'intermédiaire de caloducs ou de boucles fluides, le flux solaire vers des surfaces matérielles, telles que des radiateurs.

5. Dispositif selon l'une quelconque des revendications 1 à 4, **caractérisé en ce que** le baffle thermique (11,12,13) draine par conduction ou par radiation, par exemple par l'intermédiaire de caloducs ou de boucles fluides, le flux solaire vers des surfaces non matérielles, telles qu'une surface d'entrée du baffle solaire (13).

6. Dispositif selon l'une quelconque des revendications 1 à 5, **caractérisé en ce que** des entretoises isolantes (6) telles que des lames en titane par exemple, correspondant à un premier type de moyens de découplage thermique, assurent le découplage thermique par conduction.

7. Dispositif selon l'une quelconque des revendications 1 à 6, **caractérisé en ce que** des écrans radiatifs tels que des MultiLayer Insulation par exemple, correspondant à un second type de moyens de découplage thermique, assurent le découplage thermique par radiation.

8. Dispositif selon l'une quelconque des revendications 1 à 7, **caractérisé en ce que** la structure thermique (A) comporte au moins deux baffles thermiques (11,12,13) dont l'un est appelé baffle solaire (11) et l'autre baffle interne (12,13).

9. Dispositif selon la revendication 8, **caractérisé en ce que** le baffle solaire (13) est constitué d'aluminium.

10. Dispositif selon l'une quelconque des revendications 8 à 9, **caractérisé en ce que** le baffle interne (12,13) est constitué de l'un des matériaux suivants : aluminium, béryllium, céramique, SiC.

11. Dispositif selon l'une quelconque des revendications 8 à 10, **caractérisé en ce que** le baffle solaire (13) présente une hauteur d'environ 1,6 mètre.

12. Dispositif selon l'une quelconque des revendications 2 à 11, **caractérisé en ce que** les éléments permettant de collecter, de traiter ou de détecter un rayonnement électromagnétique, tels que des surfaces collectrices, des dioptres ou des miroirs (M₀,M₁,M₂,M₃,Mᵣ) comportent de l'argent ou de l'or.

13. Dispositif selon l'une quelconque des revendications 1 à 12, **caractérisé en ce que** la plate-forme commune (5) présente une longueur d'environ 1,5 mètre et une largeur d'environ 1 mètre.

## Claims

1. A solar protection device for a spatial instrument including:
- a thermal structure (A) including at least one thermal baffle (11, 12, 13) designed to intercept the solar flow illuminating the spatial instrument,
- a plate (3) supporting the thermal structure (A),
- a stabilised platform (21) fitted with measurement or observation instruments (M₀, M₁, M₂, M₃, Mᵣ),
- a common platform (5),
said common platform (5) independently supporting said plate (3) and said stabilised platform (21), said thermal structure (A) and the stabilised platform (21) having no physical contact with each other and thus being mechanically decoupled from each other, **characterised in that** said thermal structure (A) and said plate (3) are also thermally decoupled using thermal decoupling means (6, 7).

2. The device according to claim 1, **characterised in that** the stabilised platform (21) supports and stabilises elements allowing collection, processing or detection of electromagnetic radiation, such as collecting surfaces, dioptres or mirrors (M₀, M₁, M₂, M₃, Mᵣ).

3. The device according to any one of claims 1 to 2, **characterised in that** the thermal baffle (11, 12, 13) stores the solar flow by way of sensible or latent heat.

4. The device according to any one of claims 1 to 3, **characterised in that** the thermal baffle (11, 12, 13) drains by conduction or radiation, for example, by means of heatpipes or fluid circuits, the solar flows towards material surfaces such as radiators.

5. The device according to any one of claims 1 to 4, **characterised in that** the thermal baffle (11, 12, 13) drains by conduction or radiation, for example, by means of heatpipes or fluid circuits, the solar flows towards non-material surfaces, such as a solar baffle (13) input surface.

6. The device according to any one of claims 1 to 5, **characterised in that** isolating members (6) such as titanium plates, for example, corresponding to a first type of thermal decoupling means, assure thermal decoupling by conduction.

7. The device according to any one of claims 1 to 6, **characterised in that** radiating screens such as MultiLayer Insulation, for example, corresponding to a second type of thermal decoupling means, assure thermal decoupling by radiation.

8. The device according to any one of claims 1 to 7, **characterised in that** the thermal structure (A) includes at least two thermal baffles (11, 12, 13), one of which is referred to as a solar baffle (11) and the other is referred to as an internal baffle (12, 13).

9. The device according to claim 8, **characterised in that** the solar baffle (13) is constituted by aluminium.

10. The device according to any one of claims 8 to 9, **characterised in that** the internal baffle (12, 13) is made from one of the following materials: aluminium, beryllium, ceramic, SiC.

11. The device according to any one of claims 8 to 10, **characterised in that** the solar baffle (13) is approximately 1.6 metre in height.

12. The device according to any one of claims 2 to 11, **characterised in that** the elements allowing collection, processing or detection of electromagnetic radiation, such as collecting surfaces, dioptres or mirrors (M₀, M₁, M₂, M₃, Mᵣ), include gold or silver.

13. The device according to any one of claims 1 to 12, **characterised in that** the common platform (5) is approximately 1.5 metres long and approximately 1 metre wide.

## Patentansprüche

1. Sonnenschutzvorrichtung für ein Weltrauminstrument, die Folgendes umfasst:
- eine thermische Konstruktion (A) mit einem Hitzeschild (11, 12, 13) zum Abfangen des das Weltrauminstrument beleuchtenden Solarflusses,
- eine die thermische Konstruktion (A) tragende Platte (3),
- eine stabilisierte Plattform (21), die mit Mess- oder Beobachtungsinstrumenten (M₀, M₁, M₂, M₃, Mᵣ) ausgestattet ist,
- eine gemeinsame Plattform (5),
wobei die gemeinsame Plattform (5) die Platte (3) und die stabilisierte Plattform (21) unabhängig trägt, wobei die thermische Konstruktion (A) und die stabilisierte Plattform (21) keinerlei physischen Kontakt zwischen sich haben und demzufolge mechanisch voneinander abgekoppelt sind, **dadurch gekennzeichnet, dass** die thermische Konstruktion (A) und die Platte (3) auch durch thermische Abkopplungsmittel (6, 7) voneinander abgekoppelt sind.

2. Vorrichtung nach Anspruch 1, **dadurch gekennzeichnet, dass** die stabilisierte Plattform (21) Elemente trägt und stabilisiert, die das Sammeln, Verarbeiten oder Erkennen einer elektromagnetischen Strahlung ermöglichen, wie z.B. Sammelflächen, Diopter oder Spiegel (M₀, M₁, M₂, M₃, Mᵣ).

3. Vorrichtung nach Anspruch 1 oder 2, **dadurch gekennzeichnet, dass** der Hitzeschild (11, 12, 13) den Solarfluss als fühlbare oder latente Wärme speichert.

4. Vorrichtung nach einem der Ansprüche 1 bis 3, **dadurch gekennzeichnet, dass** der Hitzeschild (11, 12, 13) die Solarflüsse durch Leitung oder Strahlung, zum Beispiel mittels Wärmerohren oder Fluidkreisläufen, in Richtung auf Materialflächen wie Kühlkörper ableitet.

5. Vorrichtung nach einem der Ansprüche 1 bis 4, **dadurch gekennzeichnet, dass** der Hitzeschild (11, 12, 13) den Solarfluss durch Leitung oder Strahlung, zum Beispiel mittels Wärmerohren oder Fluidkreisläufen, in Richtung auf Nicht-Materialflächen wie eine Eingangsfläche des Solarschildes (13) ableitet.

6. Vorrichtung nach einem der Ansprüche 1 bis 5, **dadurch gekennzeichnet, dass** Isolierelemente (6) wie z.B. Titanplatten, die einem ersten Typ von thermischem Abkopplungsmittel entsprechen, eine thermische Abkopplung durch Leitung gewährleisten.

7. Vorrichtung nach einem der Ansprüche 1 bis 6, **dadurch gekennzeichnet, dass** Strahlungsschirme wie z.B. MultiLayer Insulation, die einem zweiten Typ von thermischem Abkopplungsmittel entsprechen, eine thermische Abkopplung durch Strahlung gewährleisten.

8. Vorrichtung nach einem der Ansprüche 1 bis 7, **dadurch gekennzeichnet, dass** die thermische Konstruktion (A) wenigstens zwei Hitzeschilder (11, 12, 13) umfassen, von denen eines als Solarschild (11) und das andere als Innenschild (12, 13) bezeichnet wird.

9. Vorrichtung nach Anspruch 8, **dadurch gekennzeichnet, dass** der Solarschild (13) aus Aluminium gebildet ist.

10. Vorrichtung nach einem der Ansprüche 8 bis 9, **dadurch gekennzeichnet, dass** der Innenschild (12, 13) aus einem der folgenden Materialien gebildet ist: Aluminium, Beryllium, Keramik, SiC.

11. Vorrichtung nach einem der Ansprüche 8 bis 10, **dadurch gekennzeichnet, dass** der Solarschild (13) eine Höhe von etwa 1,6 Metern hat.

12. Vorrichtung nach einem der Ansprüche 2 bis 11, **dadurch gekennzeichnet, dass** die Elemente, die das Sammeln, Verarbeiten oder Erkennen einer elektromagnetischen Strahlung ermöglichen, wie z.B. Sammelflächen, Diopter oder Spiegel (M₀, M₁, M₂, M₃, Mᵣ), Gold oder Silber enthalten.

13. Vorrichtung nach einem der Ansprüche 1 bis 12, **dadurch gekennzeichnet, dass** die gemeinsame Plattform (5) eine Länge von etwa 1,5 Metern und eine Breite von etwa 1 Meter hat.
